# EUROPEAN PATENT APPLICATION

(11) **EP 2 521 029 A1**
(43) Date of publication of application: **07.11.2012**
(21) Application number: 12166685.3
(22) Date of filing: 03.05.2012
(51) Int. Cl.: G06F 9/44, G06F 17/30, G06Q 10/06, G06Q 10/10

(54) **Methods and systems for providing a normalized end-customer portal**

(30) Priority: 03.05.2011 US 201113099449
(71) Applicant: Monolith Technology Services, Inc., St Charles, IL 60175 (US)
(72) Inventor: Ennis, Shawn Patrick, St Charles, IL Illinois 60175 (US)
(74) Representative: Pelly, Jason Charles

(57) **Abstract**

Systems and methods disclosed herein provide a normalized end-customer portal containing various panels providing data from disparate sources. In one embodiment a dashboard of panels are provided and the end-customer may select a given panel to receive various views of the panel. After a selection is performed of a particular view, data (which may include real-time, static and periodically updating data) is retrieved from the corresponding server(s) for normalization and display on the basis of one or more rules. Interface information may also be propagated for use in the display of received data. The end result is a normalized portal for many different sources of data which thus hides the idiosyncrasies of different interfaces needed for the many different applications.

## Description

### COPYRIGHT NOTICE

A portion of the disclosure of this patent document contains material, which is subject to copyright protection. The copyright owner has no objection to the facsimile reproduction by anyone of the patent document or the patent disclosure, as it appears in the Patent and Trademark Office patent files or records, but otherwise reserves all copyright rights whatsoever.

### FIELD OF THE INVENTION

Embodiments of the invention described herein generally relate to the management of applications providing disparate types of data through the use of a consolidated portal. More specifically, embodiments of the present invention are directed towards systems and methods for providing a normalized end-customer portal operative to display one or more panels, with a given panel providing data from disparate data sources and/or applications.

### BACKGROUND OF THE INVENTION

Network management systems that major vendors offer for management and control of digital communications networks are typically provided in the form of frameworks that are composed of multiple systems developed by different organizations at different points in time. For example, a given network management framework may comprise systems from various vendors, but brought together by way of acquisition; the framework allows such disparate systems to work together as a single, cohesive system.

Traditionally, the end-customer using such frameworks is provided data from disparate data sources (e.g., billing, inventory, etc.) and separate applications. As a result, the end-customer has to switch between several applications to view data from separate sources. This causes decreases in efficiency because the end-customer is forced to track application and data state across multiple screens or windows. Even when such data is presented in a dashboard format, similar decreases in efficiency are noted with respect to monitoring and managing multiple data sources through multiple disparate interfaces, even presented within a single dashboard. Furthermore, the need to develop and program custom individual interfaces in disparate languages to manage these various applications and data sources results in longer product development cycles.

Augmenting these problems is the fact that some data is provided in report form rather than in real-time, meaning that the end-customer is unaware if the data has changed since opening or otherwise generating the report. Moreover, the end-customer usually has little control over the manner of display or formatting of the data and thus has to accept the UI decisions of a given vendor (e.g., the same display for all end-customers). Indeed, a given end-customer who is seeking to implement a different manner in which to format or display data from a given application or data source must request that the interface be built by the vendor or employ the services of custom software development consultants to build such interfaces. Because such systems are not easily customizable, the resulting product requires a time consuming and an economically intensive process.

Accordingly, there is a need in the art for systems and methods that provide an end-customer portal that provides a normalized interface to a plurality of disparate applications and data sources, as well as programmatic interfaces for customizing such normalized interfaces in a rapid and economically efficient manner.

### SUMMARY OF THE INVENTION

The present invention is directed towards systems and methods for providing a normalized end-customer portal. According to one embodiment, a computer-implemented method for providing a normalized end-customer portal comprises retrieving data from one or more sources associated with one or more rules, a given rule associated with one or more user profiles, normalizing, via a processing device, the data in accordance with one or more rules and transmitting, via the processing device, the normalized data to a requesting client device. The one or more panels are displayed at the requesting client device comprising one or more components based on the one or more rules.

According to embodiments of the invention, the method comprises receiving a selection of a given one of the one or more panels and retrieving data from the one or more sources associated with the one or more rules. The real-time data is displayed in one or more views on the basis of the one or more rules. Displaying data at a client device in one or more panels on the basis of the one or more rules may comprise retrieving authorization data from the one or more user profiles and limiting the number of panels displayed on the basis of the authorization data. The one or more of the panels may be built using PHP to provide a normalized interface for the display of retrieved data. The displayed data may be updated asynchronously on the basis of changes to data in the one or more sources. According to one embodiment, the method comprises setting a notification threshold on the data and receiving one or more notices on the basis of the notification limit. The method may also comprise displaying one or more suggestions of additional one or more panels on the basis of the one or more profiles.

Embodiments of the present invention also contemplate a system comprising at least one processing device coupled to at least one client device over a network, the at least processing device operable to provide a normalized end-customer portal to the at least one client device. The system according to the present embodiment comprises one or more application servers, a given application server providing output data, and an end-customer interface normalization server operative to receive the output data from a given one of the one or more application servers, normalize the received output data in accordance with one or more of rules and transmit the normalized data to the at least one client device.

According to one embodiment, the end-customer interface normalization server comprises one or more rules files operative to maintain the one or more rules. The end-customer interface normalization server may comprise a data source identifier operative to identify the source of output data and select a given rule for normalizing the output data. The end-customer interface normalization server may also comprise an interface engine operative to execute a given rule to normalize the output data.

According to embodiments of the invention, the one or more application servers transmit interface information and the end-customer interface normalization server uses the interface information to present an interface on a given client device. The application servers may also be remote from the end-customer interface normalization server.

### BRIEF DESCRIPTION OF THE DRAWINGS

The invention is illustrated in the figures of the accompanying drawings which are meant to be exemplary and not limiting, in which like references are intended to refer to like or corresponding parts, and in which:

Fig. 1 presents a block diagram depicting a system for providing a normalized end-customer portal according to one embodiment of the present invention;

Fig. 2 presents a block diagram illustrating one or more application servers according to one embodiment of the present invention;

Fig. 3 presents a block diagram illustrating an end-customer interface normalization server according to one embodiment of the present invention;

Fig. 4 presents a flow diagram illustrating a method for retrieving and normalizing data according to one embodiment of the present invention;

Fig. 5 presents a flow diagram illustrating a method for determining panels for presentation to a given end-customer according to one embodiment of the present invention; and

Fig. 6 presents a logical screen diagram illustrating transitions between different types of panels and views according to one embodiment of the present invention.

### DETAILED DESCRIPTION OF THE EMBODIMENTS

In the following description, reference is made to the accompanying drawings to illustrate exemplary embodiments. It is to be understood that other embodiments may be utilized and structural changes may be made without departing from the scope of the present invention. Further, embodiments may exist with single, discrete components, and alternative embodiments exist wherein the illustrated devices may be integrated and/or distributed across multiple hardware devices. Additionally, the components and/or devices may be distributed geographically in addition to physically.

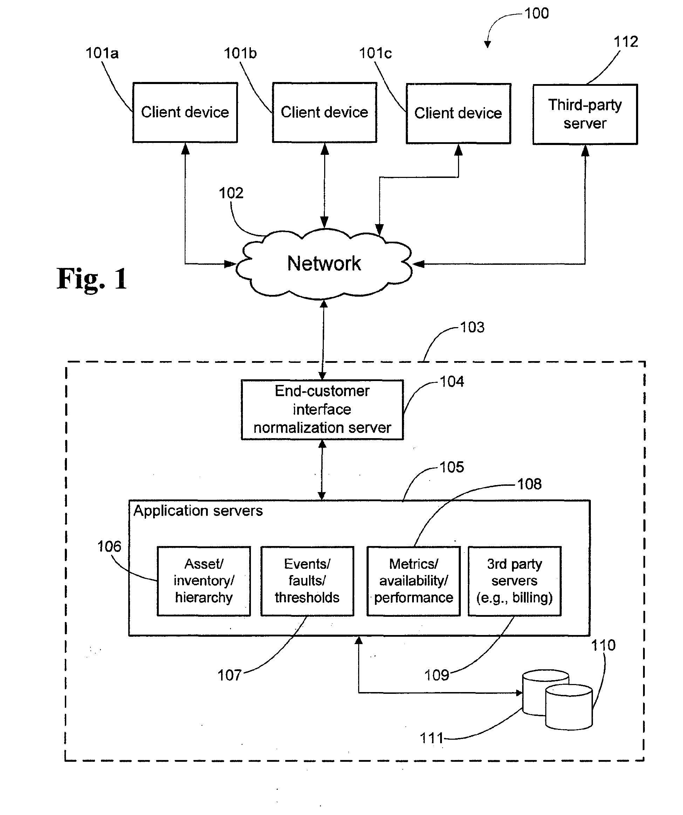

Fig. 1 presents a block diagram illustrating a system for providing a normalized end-customer portal according to one embodiment of the present invention. Figure 1 illustrates a system 100 comprising plurality of client devices 101a, 101b and 101c (collectively 101) and a third-party server 112 in communication with an end customer interface normalization server 104 and application server(s) 105 via a network 102. According to the embodiment of Fig, 1, the application server 105 consists of a plurality of application servers, e.g., asset/inventor/hierarchy server 106, event/fault/threshold server 107, metrics/availability/performance server 108 and other third-party servers 109, in communication with one or more databases 110, 111, which My be operative to store at least a portion of the data for a given application server 105. Those of skill in the art recognize that that the application server(s) 105 need not be physically co-located (logically or physically) at a deployment 103 with the end-customer interface normalization server 104. Furthermore, the servers 106, 107, 108 and 109 and databases 110, 111 may comprise any suitable physical processing and storage devices operative to perform processing operations as described herein in response to executable instructions.

In the illustrated embodiment, a plurality of client devices 101 and servers 105, 112 are operative to transmit and receive data by way of the network 102. A given client device 101 may comprise any number of computing devices such as personal, general purpose computers, handheld devices and mobile devices, or any other device operative to transmit and receive, as well as process, data. A given third-party server 109, 112 may comprise a third-party application, such as another normalized end-customer portal, web server, generic server or service providing specific services to end users or applications. The servers 105, 112 provide data to clients 101, for example, by accessing data from the servers 105, 112 through use of a login page or similar mechanism for validating the credentials of a given client 101.

A given server may comprise various other hardware components operative to transmit and receive data across the network. The database may comprise various types of database, such as Oracle, SQL Server, Advantage Database Server, Firebird, Microsoft Access, DB2, Altibase, etc. Network may comprise various networking embodiments such as IP, Ethernet, WAN, UDP, MPLS, TCP, ATM, LAN, X.25, 3G, 4G, and EDGE, or any network medium facilitating data transmissions between devices.

A given client 101 requiring services or data from a given server, such as application server 105 or third-party server 112, issues a request to the end-customer interface normalization ("ECIN") server 104. The ECIN server 104 receives requests over a communication interface, which it passes to an interface engine, which may generate an interface for the display of data responsive to the request. When initializing, the ECIN server 104 may load one or more rules that govern the display of data from a given data source, whereby the ECIN server may use a given rule to format data that a client requests for presentation on a given client 101, which may comprise the generation of one or more custom interfaces. According to one embodiment, a given client 101 identifies one or more applications or services to view in a unified portal in conjunction with one or more rules that govern the display of output data from the one or more applications or services. Where there is a change in output data from a given application or service, the ECIN 103 may execute a rule or rules associated with the given application or service to determine the manner in which the output data is to be formatted for display on the client device 101. According to one embodiment, the association of rules and applications or services may be made on a per-user basis (e.g., for different employees), perentity basis (e.g., for different corporations or organizations) or generally for all users..

The ECIN server 104 may receive the output data from one or more given applications or services, format the output data according to one or more rules and transmits the formatted data to the requesting client 101. According to one embodiment, the ECIN server 104 dynamically generates HTML according to the one or more rules for rendering on a given client device 101 by a browser (not pictured), which may be executing thereupon. The rules that the ECIN server 104 implements may be written in a high-level scripting language that allows for the creation of dynamic web pages and web page content, as well as quick and efficient manipulation of text, graphic, audio and video data output from the applications with which the ECIN server 104 interfaces. According to one embodiment, the ECIN sever 104 interprets rules written according to PHP and outputs a combination of HTML and PHP program code for interpretation and rendering by the requesting client 101. In this manner, a given client 101 may receive a custom output data set from the application servers 105, 112, as well as present the data with customized formatting and interfaces, which may comprise custom UI or other interface controls for manipulating or interfacing with the data.

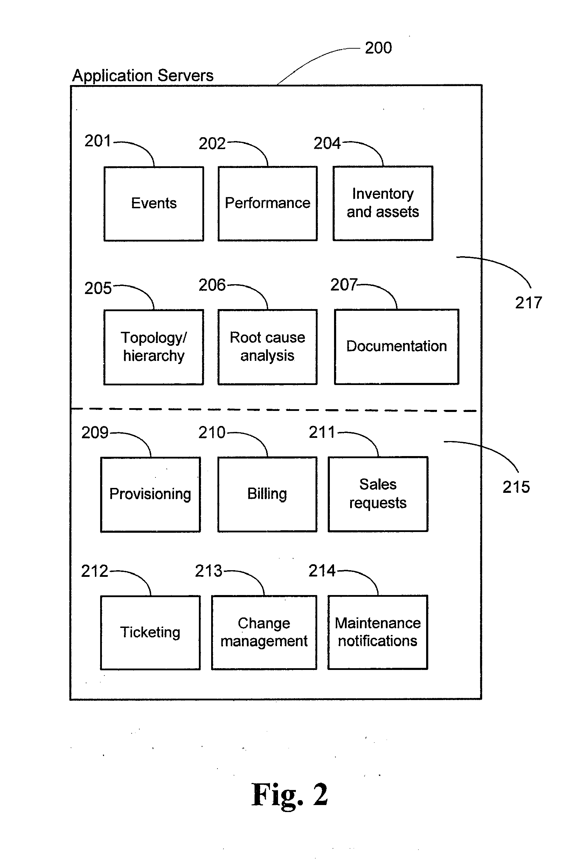

Fig. 2 presents a block diagram illustrating one or more application servers according to one embodiment of the present invention. The application server 200 according to the embodiment of Fig. 2 comprises a number of different servers, with a given server operative to perform a specific task, purpose or function, which may comprise overlap with the functionality of other severs comprising the application server 200. Some servers 217 comprising the application server 200 may be related or integrated to provide cross-application functionality, such as applications provided as part of an integrated platform or suite. According to one embodiment, the application server 200 comprises an integrated suite of network management tools and services 217 that are operative to provide event storage 201, performance management and SLA monitoring 202, inventory and asset management 204, topology/hierarchy storage and control 205, root cause analysis engine 206 and documentation 207, which may comprise application and network specific documentation. These servers 217, which may be provided by a single software provider, may operate in accordance with a common manner or according to a common scheme, e.g., a common underlying programming language that an end user may employ to interface or otherwise communicate with the servers, which may comprise the execution of arbitrary commands on one or more of the servers. Furthermore, these servers 217 may output data or interface information in a common manner or format. Accordingly, a library of rules may be generated or otherwise provided to allow an ECIN server to interface these sources 217.

In addition to the foregoing servers, additional servers 215 upon which an administrator may rely on to determine the state and status of the enterprise may include applications custom built by a given end-customer, while others may be applications developed by disparate third-party parties. Such servers 215 may be custom, legacy or ad hoc applications, which may comprise provisioning 209, billing 210, sales 211, trouble ticketing 212, change management 213, maintenance 214, etc. These servers 215, which may be provided by disparate and unrelated software providers, may operate in accordance with one or more distinct manners or according to a distinct scheme, e.g., a different underlying programming languages that an end user may employ to interface or otherwise communicate with the servers, which may comprise the execution of arbitrary commands on one or more of the servers. Furthermore, these servers 215 may output data or interface information in disparate manners or formats. A given application comprising the application server 200 may be in communication with one or more databases (not pictured), which may be operative to maintain real-time data for a given application.

The application servers 200 in many environments are a heterogeneous set of hardware and software, typically purchased from different vendors at different points in time by different individuals. Although some of these applications 217 may be intended to operate in an integrated fashion, others are stand-alone applications 215 that lack integration with other systems. Accordingly, the application server 200 may transmit data in accordance with a variety of formats and techniques, which may also include the transmission of interface information. An ECIN server according to embodiments of the present invention may receive data (which may include interface information) from the application servers 200 and transform or normalize the data for unified presentation at a given client device, e.g., a normalized end customer portal that may be presented in accordance with one or more customized interfaces that a client device receives over a network.

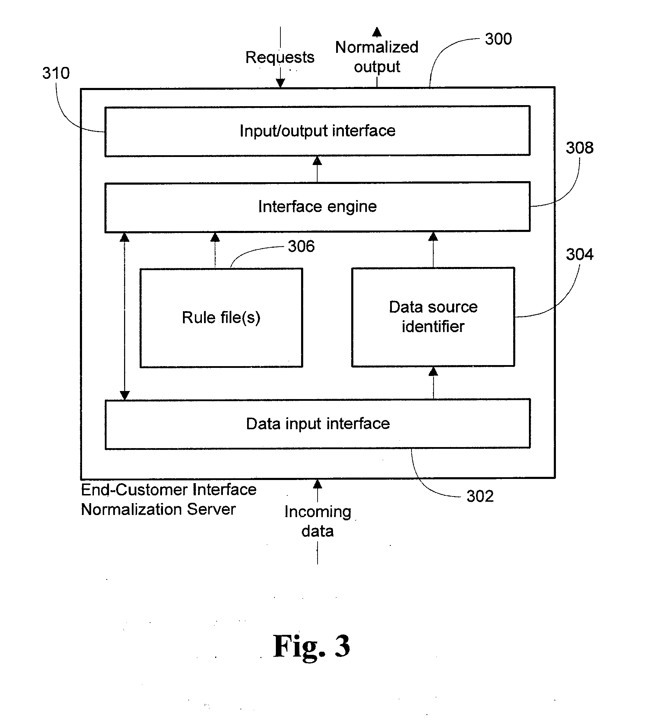

Fig 3 presents a block diagram illustrating an end-customer interface normalization ("ECIN") server according to one embodiment of the present invention. An ECIN server according to the embodiment of Fig, 3 comprises an input/output interface 310, an interface engine 308, one or more rule files 306, a data source identifier 304 and a data input interface 302. Whether initializing a normalized end customer portal for a given client device or updating data that a given portal displays, a client device sends data and/or interface requests to the ECIN server 300 that the server receives on the input/output interface 310. The input/output interface may comprise a combination of circuitry and appropriate driver and communication software to allow the ECIN server to receive requests and transmit responses in accordance with one or more network protocols.

The input/output interface 210 receives the request from a client devices a passes the information to the interface engine 308 for processing. The interface engine 308 may comprise a combination of hardware and software, including ASICs for optimization of execution of the interface engine 308. Through the execution of one or more rules, the interface engine 308 is operative to provide a normalized end customer portal, which may be presented in accordance with one or more customized interfaces, which a client device receives over a network. The one or more rule files 306 instruct the interface engine 308 as to the manner in which to transform or normalize data from a given application for presentation to a client device, which may comprise the transmission of customized UI information or controls. According to one embodiment of the invention, the rule files 306 are php files that the interface engine 308 executes to output HTML and php code for rendering and interpretation by receiving client devices to provide a normalized end customer portal.

According to embodiments of the invention, the interface engine 308 loads one or more rule files 306, which may instruct the interface engine as to the manner in which to retrieve data and/or interface information from application servers by accessing a data input interface 302. Alternatively, or in conjunction with the foregoing, application servers across the enterprise may broadcast or otherwise transmit data and/or interface information to the ECIN server 300, which the data input interface 302 may receive and pass to the data source identifier 304. The data source identifier 304 may identify the source of incoming data or interface information and instruct the interface engine 308 as to the appropriate rule file(s) 306 to load for formatting or normalization of the data and/or interface information.

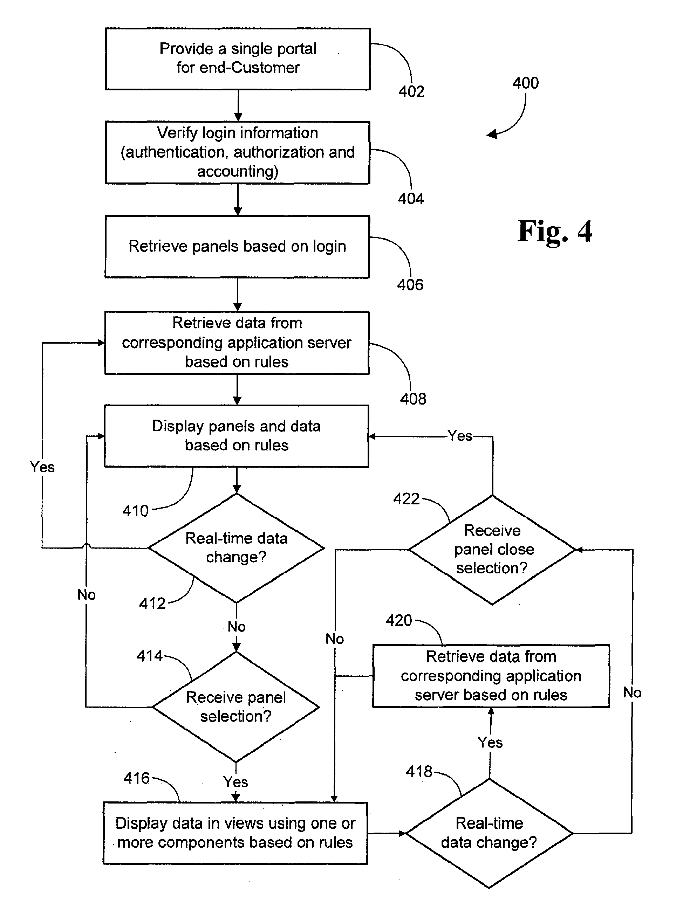

Fig. 4 presents a flow diagram illustrating a method for retrieving real-time data for a particular view of normalized data from one or more applications. The end-customer is presented with a portal providing access to a number of different applications, but appears to the end-customer as one seamless application. As those of skill in the art should recognize, the portal is normalized as one central point for many different types of data and interfaces, thus hiding the idiosyncrasies of different interfaces and formatting provided for by the various disparate applications. In one embodiment, the portal is deployed to the technology management space, thereby providing a facility to manage many different networks/devices and services across many levels of granularity.

After the end-customer enters the portal, step 402, he or she is required to enter a login and password, step 404, and in some embodiments the end-customer must enter a security code that is provided to the end-customer using another device. In other embodiments, the end-customer only has to touch the screen (e.g., biometrics) or provide a voice command, with the method 400 providing appropriate access on the basis of the credentials that the user provides.

The login information is used to perform a lookup of the end-customer's profile, which may contain background information (e.g., position, age, etc.), the panels that the end-customer (or end-customer security group) is authorized to view, past history, rules, etc. The level of authorization may take many forms related to the end-customer, such as internal to the end-customer (e.g., operators, engineers, sales/marketing, and executive, etc.) and external customers. A system administrator, which may be an employee of the end-customer, may setup these different types and levels as is known to those of skill in the art.

According to some embodiments, an audit trail is provided to account for end-customer activity. That is, throughout the entire process from displaying the portal through every selection and display the data is logged in some form for maintenance in persistent storage (e.g., database). This log may later be used to generate predictions based on data mining techniques or for security purposes in identifying abnormal system activity.

One or more panels may be retrieved on the basis of a profile for the end-customer, step 406, and data retrieved and displayed for the corresponding one or more panels on the basis one or more rules, steps 408 and 410, which may be identified in the profile. According to various embodiments, rules include, but are not limited to, the following: (1) whether the end-customer is allowed to update the real-time data; (2) height, width, type, and size of the components being used to display the data; (3) the display framework (e.g., one of the displays provided for the panels discussed above); (4) the number of views that can be concurrently shown in or merged into one screen; (5) the length of time a particular view or component can be shown; (6) whether the data should be logged as in some instances it may be desirable for security reasons not to log the data selected; (7) whether certain components are available to be displayed; (8) identity of sources (e.g., databases containing display data, including third-party databases) from which data is retrieved; (9) whether the components being displayed can be customized; (10) whether additional security information is required from the end-customer; (11) whether there is any monetary cost associated with using certain views or components; etc.

These rules improve efficiency and overall satisfaction with the end-customer. Rather than having the same display for every end-customer, as with certain applications in the prior art, the rules provided by embodiments of the present invention offer a manner in which to customize the normalized interface for each end-customer. Thus, a given end-customer can have different components or placement of the components, for example, than other end-customers. This improves overall satisfaction of the end-customer as they are not stuck with a prebuilt format, but can customize simply with the addition of a rule, which could be added by the system administrator and may be reused across the end-customer.

While displaying real-time data, which may alternatively or in conjunction comprise periodically updated data, an asynchronous update is performed when the data changes, step 412 and 408, to ensure that the end-customer is always viewing the freshest data. For example, a server may receive a message from a corresponding database that a data value has changed, causing the server to retrieve the data and cause it to be sent to the end-customer. In another embodiment, the server continuously polls database and applications until determining that a value has changed, at which point the data is normalized according to the appropriate rules and transferred to the end-customer.

If a real time data change has not taken place, a check is performed to determine if the end-customer has selected a panel to access one or more views, step 414. Where the end-customer selects a panel to access one or more views, the method 400 displays data in a given view using one or more components on the basis of the rules associated with the end-customer (end-customer security group, etc.), step 416. As discussed above, if there is a real-time data change, step 418, the data in the components that the view displays are updated, step 420, which may comprise retrieving data from corresponding applications or services on the basis of one or more rules. Where there is no real time data change, step 418, the method 400 performs a check for receipt of a panel close selection, step 422. When the check at step 422 evaluates to true, program flow continues with the display of one or more panels on the basis of the one or more rules, step 410.

In addition to viewing real-time data, the end-customer may also in certain embodiments edit data. For example, the end-customer may notice an error in the Billing data, such as incorrect amount. Rather than having to find the Billing application and edit the system as in the prior art, the end-customer may make changes within the portal, causing the changes to be propagated to the appropriate application or database. By allowing both viewing and editing, the end-customer may use the portal as one complete normalized system, without the need to resort to several applications, which may all use different commands, interfaces, etc.

In other embodiments, the end-customer may create a customized view using other views or even a subset of a given view. For example, the end-customer may have certain components of a Billing view combined with other components of an Inventory view to generate one new view comprising the desired components. Additionally, the end-customer may select certain components within a given view to form a subset view. In this manner, systems and methods in accordance with embodiments of the present invention allow the end-customer to direct development requirements, thus ensuring the end-customer has a mechanism to influence what is needed to perform a given task.

In certain embodiments, the end-customer can set notification limits or thresholds with regard to the data to ensure the receipt of mobile phone, blackberry, and similar messages in response to certain critical information changes. For example, a manager of an installation may wish to know when a given circuit exceeds a certain capacity or when a network device goes offline.

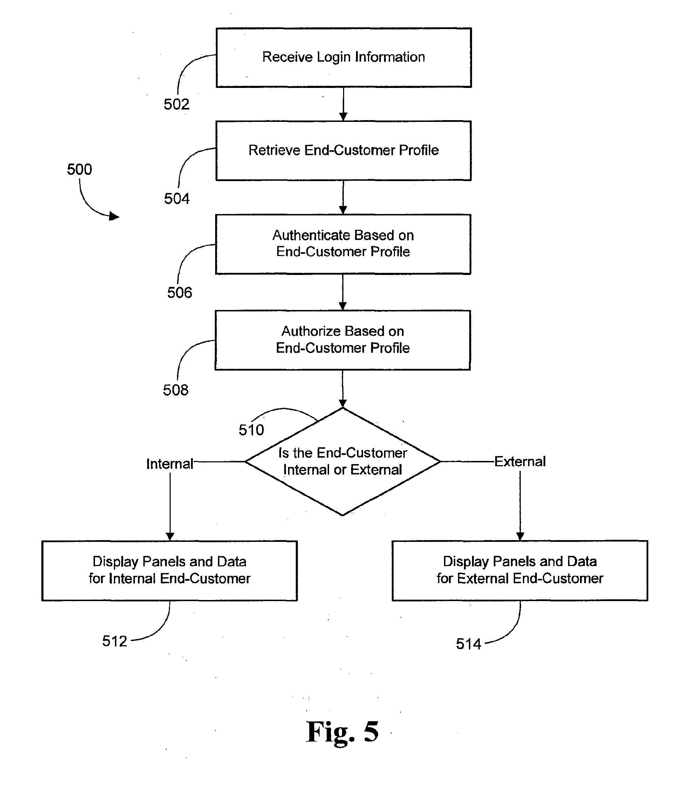

Fig. 5 presents a flow diagram displaying a method for displaying one or more panels of real-time data on the basis of a profile for a given end-customer. As discussed above, credentials are received, step 502, and an end-customer may be authenticated and authorized on the basis of logon credentials in an end-customer profile, steps 504 and 506. Upon authorizing a given end-customer, step 508, a determination may be made to determine whether the end-customer is internal or external, step 510. If internal, then the one or more panels may be displayed for a given individual user, step 512, that is, the display of panels is individualized in that a given internal user may have one or more panels that are different from another internal user. A similar description is applicable to the external user, step 514, whereby a given end-customer receives an individualized set of panels.

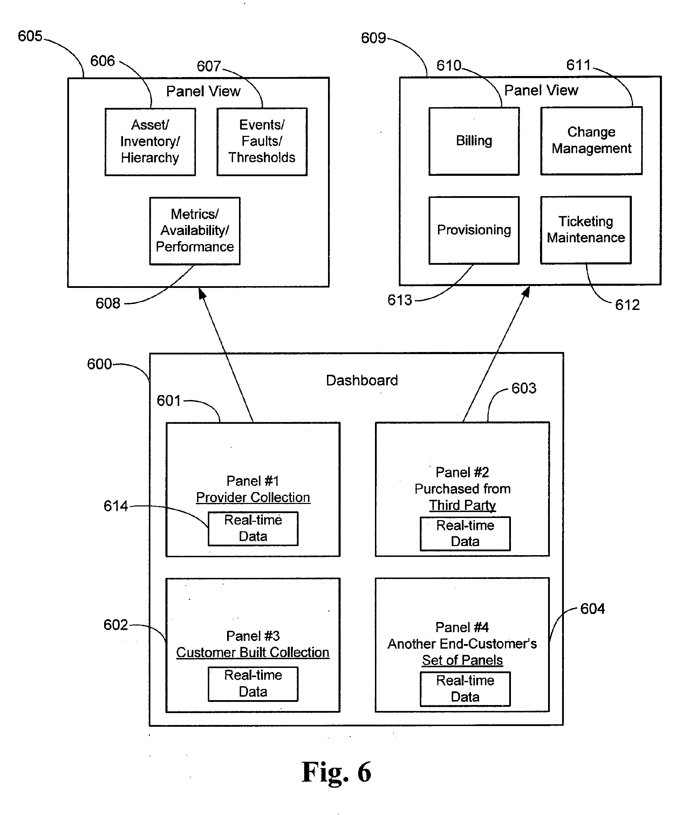

Fig. 6 presents a logical screen diagram illustrating transitions between different types of panels and views with one or more components (e.g., charts, tables, video, text, etc.) used to display the data according to one embodiment of the present invention. In the embodiment of Fig. 6, , a dashboard 600 is provided comprising various panels, such as provider's collection 601, purchased from a third-party 603, end-customer built collection 602, and connection to another end-customer's set of panels 604. Numerous other types of panels are contemplated as falling within the scope of the invention.

A given panel may contain components to display real-time data, periodically updating data and combinations thereof. End-customer built panels include panels built by the end-customer using any type of programming language, such as ColdFusion, C++, C, C#, TCL/TK, Java, ASP.NET, D, JavaScript, Perl , Python, VB.NET, and PHP, etc. The advantage of using a ubiquitous scripting language such as PHP is the easy and low cost manner in which the framework allows real-time integration of data from disparate enterprise resources. Moreover, PHP allows the end-customer to build custom panels and views that may be easily integrated to existing panels and views rapidly without the long development cycles associated with prior art development.

The panels in the dashboard can take numerous forms according to various embodiments. For example, a given panel could be shown as rotating images, where moving a mouse over the image causes the images to change so that the end-customer may view the different panel views without selecting any panel. Alternatively, another panel may be displayed in the form of video, where the video provides a brief preview of the real-time data expected from various views. A given panel may preview and/or update data asynchronously, e.g., a given panel may be updated without the need to leave the screen or refresh the overall panel. Furthermore, a given panel may be displayed according to a priority whereby a first panel is displayed in certain circumstances while others are displayed on the basis of a ranking priority scheme, or on the basis of data in a given panel exceeding a threshold. A given panel may also display a degree of importance such that the end-customer may be appraised of distressed situations as early as possible. Further, a given panel may employ a "traffic light" motif indicating the priority state or heath the data that a given panel displays.

Once the panels are provided, real-time data 514 is retrieved from the corresponding server and then displayed using one or more components (e.g., charts, tables, video, text, etc.). The components may be built using HTTP, Java servlet, XML, etc. To ensure data is obtained in "real-time" it is necessary according to certain embodiments for the application servers and databases to coordinate upon triggering an event, such as clicking on a view. The end result for the end-customer is a normalized portal 600 that displays real-time, static and periodically updating data from a number of applications or data sources in a seamless fashion.

The end-customer may select a panel to receive a various views of the panel along with the corresponding real-time data in one or more components, for example, view 605 and video 609. A view according to one embodiment is a grouping of related information or components. For example, assume that the end-customer selects a provider built panel 601, the user may see 605 separate views for asset, inventory, hierarchy 606; events, faults, thresholds 608; and metrics, performance, availability, 608. Alternatively, assume that the end-customer selects a panel to access third party applications and services 603, the user may see 609 separate views for billing 620, change management 611, provisioning 613 and ticket maintenance 612. These views may be displayed using similar concepts as those outlined for displaying the panels. Importantly, the present invention is not limited to real-time data, and is fully operative to present static and periodically updating data in the normalized portal interface. In addition, the views may be merged such that the display of real-time data is for more than one view in the same screen. Rules, discussed previously, may describe how the views are merged and the manner in which the views may be displayed, e.g., the end-customer could drag-and-drop views such that both views are merged together.

Figures 1 through 6 are conceptual illustrations allowing for an explanation of the present invention. It should be understood that various aspects of the embodiments of the present invention could be implemented in hardware, firmware, software, or combinations thereof. In such embodiments, the various components and/or steps would be implemented in hardware, firmware, and/or software to perform the functions of the present invention. That is, the same piece of hardware, firmware, or module of software could perform one or more of the illustrated blocks (e.g., components or steps).

In software implementations, computer software (e.g., programs or other instructions) and/or data is stored on a machine readable medium as part of a computer program product, and is loaded into a computer system or other device or machine via a removable storage drive, hard drive, or communications interface. Computer programs (also called computer control logic or computer readable program code) are stored in a main and/or secondary memory, and executed by one or more processors (controllers, or the like) to cause the one or more processors to perform the functions of the invention as described herein. In this document, the terms "machine readable medium," "computer program medium" and "computer usable medium" are used to generally refer to media such as a random access memory (RAM); a read only memory (ROM); a removable storage unit (e.g., a magnetic or optical disc, flash memory device, or the like); a hard disk; or the like.

Notably, the figures and examples above are not meant to limit the scope of the present invention to a single embodiment, as other embodiments are possible by way of interchange of some or all of the described or illustrated elements. In the present specification, an embodiment showing a singular component should not necessarily be limited to other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present invention encompasses present and future known equivalents to the known components referred to herein by way of illustration.

The foregoing description of the specific embodiments so fully reveals the general nature of the invention that others can, by applying knowledge within the skill of the relevant art(s) (including the contents of the documents cited and incorporated by reference herein), readily modify and/or adapt for various applications such specific embodiments, without undue experimentation, without departing from the general concept of the present invention. Such adaptations and modifications are therefore intended to be within the meaning and range of equivalents of the disclosed embodiments, based on the teaching and guidance presented herein.

While various embodiments of the present invention have been described above, it should be understood that they have been presented by way of example, and not limitation. It would be apparent to one skilled in the relevant art(s) that various changes in form and detail could be made therein without departing from the spirit and scope of the invention. Thus, the present invention should not be limited by any of the above-described exemplary embodiments, but should be defined only in accordance with the following claims and their equivalents.

## Claims

1. A computer-implemented method for providing a normalized end-customer portal, the method comprising:
retrieving data from one or more sources associated with one or more rules, a given rule associated with one or more user profiles;
normalizing, via a processing device, the data in accordance with one or more rules,
transmitting, via the processing device, the normalized data to a requesting client device; and
displaying at the requesting client device the in one or more panels comprising one or more components based on the one or more rules.

2. The method of claim 1 further comprising:
receiving a selection of a given one of the one or more panels;
retrieving data from the one or more sources associated with the one or more rules; and
displaying the real-time data in one or more views on the basis of the one or more rules.

3. The method of claim 1 wherein displaying data at a client device in one or more panels on the basis of the one or more rules comprises retrieving authorization data from the one or more user profiles and limiting the number of panels displayed on the basis of the authorization data.

4. The method of claim 1, 2, or 3 wherein one or more of the panels are built using PHP to provide a normalized interface for the display of retrieved data.

5. The method of claim 1, 3, or 4 further comprising updating the displayed data asynchronously on the basis of changes to data in the one or more sources.

6. The method of claim 1, 3, or 4 comprising:
setting a notification threshold on the data; and
receiving one or more notices on the basis of the notification limit.

7. The method of claim 1, 3, or 4 comprising displaying one or more suggestions of additional one or more panels on the basis of the one or more profiles.

8. A system comprising at least one processing device coupled to at least one client device over a network, the at least processing device operable to provide a normalized end-customer portal to the at least one client device, the system comprising:
one or more application servers, a given application server providing output data; and
an end-customer interface normalization server operative to receive the output data from a given one of the one or more application servers, normalize the received output data in accordance with one or more of rules and transmit the normalized data to the at least one client device.

9. The system of claim 8 wherein the end-customer interface normalization server comprises one or more rules files operative to maintain the one or more rules

10. The system of claim 8 or 9 wherein the end-customer interface normalization server comprises a data source identifier operative to identify the source of output data and select a given rule for normalizing the output data.

11. The system of claim 8, 9, or 10 wherein the end-customer interface normalization server comprises an interface engine operative to execute a given rule to normalize the output data.

12. The system of claim 8, 9, 10, or 11 wherein the one or more application servers transmit interface information and the end-customer interface normalization server uses the interface information to present an interface on a given client device.

13. The system of claim 8, 9, 10, or 11 wherein the application servers are remote from the end-customer interface normalization server.
